(19) Europäisches Patentamt
European Patent Office
Office européen des brevets

(11) Veröffentlichungsnummer : **0 363 723 B1**

# (12) EUROPÄISCHE PATENTSCHRIFT

(45) Veröffentlichungstag der Patentschrift : **08.07.92 Patentblatt 92/28**

(21) Anmeldenummer : **89117746.1**

(22) Anmeldetag : **26.09.89**

(51) Int. Cl.[5] : **B05D 7/26,** C08F 265/02, C09D 151/00, // (C08F265/02, 220:10, 220:28), (C09D151/00, 161:20)

## (54) Verfahren zur Herstellung eines mehrschichtigen Überzuges, wässrige Beschichtungszusammensetzungen, wasserverdünnbarePolyacrylatharze und Verfahren zur Herstellung von wasserverdünnbaren Acrylatharzen.

Verbunden mit 89911034.0/0441800 (europäische Anmeldenummer/Veröffentlichungsnummer) durch Entscheidung vom 29.10.91.

(30) Priorität : **12.10.88 DE 3834738**

(43) Veröffentlichungstag der Anmeldung : **18.04.90 Patentblatt 90/16**

(45) Bekanntmachung des Hinweises auf die Patenterteilung : **08.07.92 Patentblatt 92/28**

(84) Benannte Vertragsstaaten : **AT BE CH DE ES FR GB IT LI NL SE**

(56) Entgegenhaltungen :
**EP-A- 0 225 612**
**PATENT ABSTRACTS OF JAPAN, vol. 6, Nr. 110 (C-109)[988] 22.6.82**

(73) Patentinhaber : **BASF Lacke + Farben Aktiengesellschaft**
**Max-Winkelmann-Strasse 80**
**W-4400 Münster (DE)**

(72) Erfinder : **Schwarte, Stephan**
**Blomenkamp 48**
**W-4400 Münster (DE)**
Erfinder : **Poth, Ulrich**
**Albachtener Strasse 97 d**
**W-4400 Münster (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines mehrschichtigen schützenden und/oder dekorativen Überzuges auf einer Substratoberfläche, bei dem

(1) eine geeignete pigmentierte Basisbeschichtungszusammensetzung auf die Substratoberfläche aufgebracht wird.

(2) aus der in Stufe (1) aufgebrachten Zusammensetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

(4) die Basisschicht zusammen mit der Deckschicht eingebrannt wird.

Die Erfindung betrifft auch wäßrige Beschichtungszusammensetzungen, wasserverdünnbare Polyacrylatharze und ein Verfahren zur Herstellung von wasserverdünnbaren Polyacrylatharzen.

Das Verfahren gemäß Oberbegriff des Patentanspruchs 1 ist bekannt. Er wird insbesondere zur Herstellung von Automobil-Metalleffektlackierungen eingesetzt (vgl. z. B. US-A-3,639,147, DE-A-33 33 072 und EP-A-38127).

Aus ökonomischen und ökologischen Gründen ist es wünschenswert, in Stufe (3) des oben beschriebenen sogenannten ""base coat-clear coat""-Verfahren wäßrige Deckbeschichtungszusammensetzungen einzusetzen.

Die Deckbeschichtungszusammensetzungen müssen mit Hilfe von automatischen Lackieranlagen durch Spritzen applizierbar sein. Dazu müssen sie bei Spritzviskosität einen so hohen Feststoffgehalt aufweisen, daß mit ein bis zwei Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand...) zeigen.

Die in Beispiel 3 der EP-A-38127 offenbarte wäßrige Deckbeschichtungszusammensetzung, erfüllt nicht alle obengenannten Forderungen.

Die der vorliegenden Erfindung zugrundeliegende Aufgabenstellung besteht in der Bereitstellung von wäßrigen Deckbeschichtungszusammensetzungen, die die obengenannten Forderungen erfüllen.

Diese Aufgabe wird überraschenderweise durch Deckbeschichtungszusammensetzungen erfüllt, die ein wasserverdünnbares Polyacrylatharz als Bindemittel enthalten, das erhältlich ist, indem

(I)

(a1) 60 - 100 Gew.-% eines mindestens eine Carboxylgruppe pro Molekül tragenden, mit (b1), (b2) und (b3) copolymerisierbaren ethylenisch ungesättigten Monomeren oder eines Gemisches aus solchen Monomeren zusammen mit

(a2) 0 - 40 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b),bestehend aus

(b1) einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2) einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3) einem mit (b1), (b2), (a1) und (a2) copolymerisierbaren, im wesentlichen carboxylgruppenfreien ethylenisch ungesättigten Monomeren oder einem Gemisch aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II) nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

In einem Referat zur JP-A-5740512 (Patent Abstracts of Japan, Band 6, Nr. 110 (C-109) (988), 22. Juni 1982) wird die Herstellung eines wasserverdünnbaren Harzes beschrieben, bei der ein radikalisch polymerisierbares Monomer in einem organischen Lösemittel in Gegenwart eines speziellen Copolymers, das 5 bis 50 Gew.-% einer $\alpha,\beta$-ungesättigten Carbonsäure einpolymerisiert enthält, polymerisiert wird. Das so erhaltene Harz wird neutralisiert und zur Herstellung von wasserverdünnbaren Beschichtungszusammensetzungen eingesetzt. In der EP-A-225 612 werden ebenfalls wasserverdünnbare, zur Herstellung von Beschichtungszusammensetzungen geeignete Polyacrylatharze beschrieben. Die in der EP-A 225 612 beschriebenen Polyacrylatharze können hergestellt werden durch Polymerisation von Monomeren in einem organischen Lösemittel in Gegenwart eines Polymers, das durch Polymerisation eines Monomerengemisches, das höchstens, 15 Gew.-% einer copolymerisierbaren, olefinisch ungesättigten Carbonsäure enthält, herstellbar ist. Die so erhaltenen Harze werden mit Ammoniak neutralisiert und zur Herstellung von wasserverdünnbaren Beschichtungszusammensetzungen eingesetzt. Weder im Referat zur JP-A-5740512 noch in der EP-A 225 612 sind irgendwelche Hinweise auf das base coat/clear coat-Verfahren und die bei diesem Verfahren auftretenden Probleme bei der automatischen Spritzapplikation von wäßrigen Deckbeschichtungszusammensetzungen mit hohen Feststoffgehalten zu finden.

Die in Stufe (1) des erfindungsgemäßen Verfahrens aufzubringenden pigmentierten Basisbeschichtungszusammensetzungen sind gut bekannt (vgl. z. B. US-A 3,639,147, EP-A-38 127, DE-A-33 33 072 und EP-A-279 813). In Stufe (1) werden vorzugsweise Metallpigmente enthaltende, insbesondere Aluminiumpigmente enthaltende Basisbeschichtungszusammensetzungen eingesetzt. Auf diese Weise werden Metalleffektlackierungen erhalten.

Bevor die Herstellung der erfindungsgemäß einzusetzenden Polyacrylatharze näher beschrieben wird, werden zwei Begriffserklärungen vorausgeschickt:

1) Als Abkürzung für ""Methacrylsäure- oder Acrylsäure-"" wird an manchen Stellen ""(Meth)acrylsäure"" verwendet.

2) Die Formulierung ""im wesentlichen carboxylgruppenfrei"" soll ausdrücken, daß die Komponenten (b1), (b2) und (b3) einen geringen Carboxylgruppengehalt (höchstens aber soviel, daß ein aus den Komponenten (b1), (b2) und (b3)
hergestelltes Polyacrylatharz eine Säurezahl von höchstens 10 hat) aufweisen können. Es ist aber bevorzugt, daß der Carboxylgruppengehalt der Komponenten (b1), (b2) und (b3) so niedrig wie möglich gehalten wird. Besonders bevorzugt werden carboxylgruppenfreie (b1), (b2) und (b3) Komponenten eingesetzt.

Zur Herstellung der erfindungsgemäß einzusetzenden Polyacrylatharze kann als Komponente (a1) jedes mindestens eine Carboxylgruppe pro Molekül tragende, mit (b1), (b2) und (b3) copolymerisierbare ethylenisch ungesättigte Monomer oder ein Gemisch aus solchen Monomeren eingesetzt werden. Als Komponente (a1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt. Als Komponente (a1) können z.B. auch Bernsteinsäuremono(meth)acryloyloxiethylester und Phtalsäuremono(meth)acryloyloxiethylester eingesetzt werden.

Als Komponente (a2) kann jedes mit (b1), (b2), (b3) und (a1) copolymerisierbare ethylenisch ungesättigte Monomer oder ein Gemisch aus solchen Monomeren eingesetzt werden. Als Komponente (a2) können alle bei der Beschreibung der Komponenten (b1), (b2) und (b3) aufgezählten Monomere eingesetzt werden.

Es ist bevorzugt, 100 Gew.-% der Komponente (a1) einzusetzen. Mit anderen Worten ausgedrückt: Es ist bevorzugt, die Komponente (a1) ohne Zumischung der Komponente (a2) einzusetzen.

Als Komponente (b1) kann jeder mit (b2), (b3), (a1) und (a2) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest , wie z.B. Methyl-, Ethyl-, Propyl-, Butyl-, Hexyl-, Ethylhexyl-, Stearyl- und Laurylacrylat und -methacrylat genannt. Bevorzugt werden Gemische aus Alkylacrylaten und/oder Alkylmethacrylaten als (b1) Komponente eingesetzt, die zumindest 25 Gew.-% aus n-Butyl- oder t-Butylacrylat und/oder n-Butyl- oder t-Butylmethacrylat bestehen.

Als Komponente (b2) können alle mit (b1), (b3), (a1) und (a2) copolymerisierbaren ethylenisch ungesättigten Monomere, die mindestens eine Hydroxylgruppe pro Molekül tragen und im wesentlichen carboxylgruppenfrei sind, oder ein Gemisch aus solchen Monomeren eingesetzt werden. Als Beispiele werden Hydroxyalkylester der Acrylsäure, Methacrylsäure oder einer anderen $\alpha,\beta$-ethylenisch ungesättigten Carbonsäure genannt. Diese Ester können sich von einem Alkylenglycol ableiten, das mit der Säure verestert ist, oder sie können durch Umsetzung der Säure mit einem Alkylenoxid erhalten werden. Als Komponente (b2) werden vorzugsweise Hydroxylalkylester der Acrylsäure und Methacrylsäure, in denen die Hydroxyalkylgruppe bis zu 4 Kohlenstoffatome enthält, Umsetzungsprodukte aus cyklischen Estern, wie z.B. $\varepsilon$-Caprolacton und diesen Hydroxyalkylestern oder Mischungen aus diesen Hydroxyalkylestern bzw. $\varepsilon$-caprolactonmodifizierten Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu

etwa 6 Kohlenstoffatomen pro Molekül, können auch eingesetzt werden.

Als Komponente (b3) können alle mit (b1), (b2), (a1) und (a2) copolymerisierbaren, im wesentlichen carboxylgruppenfreien ethylenisch ungesättigten Monomere oder Gemische aus solchen Monomeren eingesetzt werden. Als Komponente (b3) werden vorzugsweise vinylaromatische Kohlenwasserstoffe, wie Styrol, $\alpha$-Alkylstyrol und Vinyltoluol eingesetzt.

Die erfindungsgemäß eingesetzten Polyacrylatharze können hergestellt werden, indem 60 bis 100 Gew.-% der Komponente (a1) zusammen mit 0 - 40 Gew.-% der Komponente (a2) zu einem organischen Lösemittel oder Lösemittelgemisch gegeben werden, dort in Gegenwart mindestens eines Polymerisationsinitiators polymerisiert werden und nach Beendigung der Zugabe der Komponenten (a1) und (a2) ein Gemisch (b), bestehend aus den Komponenten (b1), (b2) und gegebenenfalls (b3) zu dem organischen Lösemittel oder Lösemittelgemisch gegeben wird und dort in Gegenwart mindestens eines Polymerisationsinitiators polymerisiert wird. Nach Beendigung der Polymerisation wird das erhaltene Polyacrylatharz zumindest teilweise neutralisiert und in Wasser dispergiert. Die Summe der Gewichtsanteile von (a1) und (a2) beträgt stets 100 Gew.-%. Die Komponenten (a1), (a2), (b1), (b2) und (b3) werden in Art und Menge so ausgewählt, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

Die Komponente (a1) wird - gegebenenfalls zusammen mit der Komponente (a2) - vorzugsweise innerhalb von 10 bis 60 Minuten, besonders bevorzugt innerhalb von 15 bis 45 Minuten zu dem organischen Lösemittel oder Lösemittelgemisch gegeben und dort in Gegenwart mindestens eines freie Radikale bildenden Initiators polymerisiert. Das Gemisch (b) wird vorzugsweise innerhalb von 2 bis 8 Stunden, besonders bevorzugt innerhalb von 3 bis 6 Stunden zu dem organischen Lösemittel oder Lösemittelgemisch gegeben und dort in Gegenwart mindestens eines freie Radikale bildenden Initiators polymerisiert.

Die erfindungsgemäß einzusetzenden Polyacrylatharze können auch hergestellt werden, indem die Komponente (a1) (gegebenenfalls zusammen mit a2) und das Gemisch (b) in Teilmengen alternierend zu einem organischen Lösemittel oder Lösemittelgemisch gegeben werden und dort in Gegenwart mindestens eines freie Radikale bildenden Initiators polymerisiert werden. Die Teilmengen sollten dabei jeweils aus mindestens 10 Gew.-% der insgesamt einzusetzenden Menge an Komponente (a1) und (a2) bzw. Gemisch (b) bestehen. Nach Beendigung der Polymerisation wird das erhaltene Polyacrylatharz zumindest teilweise neutralisiert und in Wasser dispergiert. Die Summe der Gewichtsanteile von (a1) und (a2) beträgt stets 100 Gew.-%. Die Komponenten (a1), (a2), (b1), (b2) und (b3) werden in Art und Menge so ausgewählt, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

In einer bevorzugten Ausführungsform dieses Herstellungsverfahrens wird in einem ersten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zu dem organischen Lösemittel oder Lösemittelgemisch gegeben und in Gegenwart mindestens eines freie Radikale bildenden Initiators polymerisiert. Nach Beendigung der Zugabe der Teilmenge 1 wird in einem zweiten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (a1) bestehende Teilmenge der Komponente (a1) (Teilmenge 2) zu dem organischen Lösemittel oder Lösemittelgemisch gegeben und in Gegenwart mindestens eines freie Radikale bildenden Initiators polymerisiert. Nach Beendigung der Zugabe der Teilmenge 2 wird in einem dritten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zu dem organischen Lösemittel oder Lösemittelgemisch gegeben und in Gegenwart mindestens eines freie Radikale bildenden Initiators polymerisiert. Nach Beendigung der Zugabe der Teilmenge 3 wird in einem vierten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (a1) bestehende Teilmenge der Komponente (a1) (Teilmenge 4) zu dem organischen Lösemittel oder Lösemittelgemisch gegeben und in Gegenwart mindestens eines freie Radikale bildenden Initiators polymerisiert.

Nach Beendigung der Polymerisation wird das erhaltene Polyacrylatharz zumindest teilweise neutralisiert und in Wasser dispergiert. Die Summe der Gewichtsanteile von (a1) und (a2) beträgt stets 100 Gew.-%. Die Komponenten (a1), (a2), (b1), (b2) und (b3) werden in Art und Menge so ausgewählt, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

Die Zugabe der Teilmengen 1 und 3 erfolgt vorzugsweise innerhalb von 1 bis 4 Stunden, besonders bevorzugt innerhalb von 1 1/2 bis 3 Stunden. Die Zugabe der Teilmengen 2 und 4 erfolgt vorzugsweise innerhalb

von 5 bis 30 Minuten, besonders bevorzugt innerhalb von 7 bis 20 Minuten.

Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, 2-Methoxypropanol, n-Butanol, Methoxybutanol, n-Propanol, Ethylenglycolmonomethylether, Ethylenglycolmonoethylether, Ethylenglycolmonobutylether, Diethylenglycolmonomethylether,Diethylenglycolmonoethylether, Diethylenglycoldiethylether, Diethylenglycolmonobutylether und 3-Methyl-3-methoxybutanol genannt. Als Beispiele für brauchbare Polymerisationsinitiatoren werden freie Radikale bildenden Initiatoren, wie z.B. Benzoylperoxid, Azobisisobutyronitril und t-Butylperbenzoat genannt. Die Polymerisation wird bei einer Temperatur von 80 bis 160°C, vorzugsweise 120 bis 160°C durchgeführt. Die Polymerisation ist beendet, wenn alle eingesetzten Monomeren im wesentlichen vollständig umgesetzt worden sind.

Die Komponenten (a1), (a2), (b1), (b2) und (b3) werden in Art und Menge so ausgewählt, daß das Reaktionsprodukt eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

Die Glasübergangstemperaturen von Polyacrylatharzen können näherungsweise nach folgender Formel berechnet werden:

$$\frac{1}{T_G} = \sum_{n=1}^{n=x} \frac{W_n}{T_{Gn}} ;$$

$T_G$ = Glasübergangstemperatur des Polyacrylatharzes
x = Anzahl der im Polyacrylatharz einpolymerisierten verschiedenen Monomeren.
$W_n$ = Gewichtsanteil des n-ten Monomers
$T_{Gn}$= Glasübergangstemperatur des Homopolymers aus dem n-ten Monomer

Die Menge und Zugabegeschwindigkeit des Initiators wird vorzugsweise so gesteuert, daß das erhaltene Polyacrylatharz ein zahlenmittleres Molekulargewicht von 2500 bis 20 000 aufweist. Es ist besonders bevorzugt, die Initiatorzugabe zum gleichen Zeitpunkt wie die Zugabe der polymerisierbaren Komponenten (a1), (a2) und (b) zu beginnen und etwa eine halbe Stunde nachdem die Zugabe der polymerisierbaren Komponenten (a1), (a2) und (b) beendet worden ist, zu beenden. Danach wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu 0,5 Gew.-%, bezogen auf das Gewicht der Reaktionsmischung, unumgesetzt zurückbleiben kann.

Die erfindungsgemäßen Polyacrylatharze werden hergestellt, indem 40 bis 87,5 Gew.-%, vorzugsweise 55 bis 80 Gew.-% der Komponente (b1), 10 bis 45 Gew.-%, vorzugsweise 12 bis 35 Gew.-% der Komponente (b2), 0 bis 25 Gew.-%, vorzugsweise 8 bis 18 Gew.-% der Komponente (b3), 2,5 bis 15 Gew.-%, vorzugsweise 3 bis 7 Gew.-% der Komponente (a1) und 0 bis 6 Gew.-% der Komponente (a2) eingesetzt werden, wobei die Summe der Gewichtsanteile von (b1), (b2), (b3), (a1) und (a2) stets 100 Gew.-% ergibt.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen, wie Ammoniak und Hydrazin verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin Triethylamin, Tripropylamin und Tributylamin.

Die Neutralisationsreaktion wird im allgemeinen durch Mischen der neutralisierenden Base mit den Polyacrylatharz durchgeführt. Dabei wird vorzugsweise soviel Base eingesetzt, daß die Deckbeschichtungszusammensetzung einen pH-Wert von 7 - 8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittlere Teilchengröße vorzugsweise zwischen 60 und 250 nm liegt

(Meßmethode: Laserlichtstreuung, Meßgerät: Malvern Autosizer 2C).

Aus den so erhaltenen wäßrigen Polyacrylatharzdispersionen werden nach allgemein bekannten Methoden durch Zumischung eines Aminoplastharzes und gegebenenfalls weiterer Zusätze, wie z.B. Verlaufshilfsmittel, UV-Stabilisatoren, transparenten Pigmenten usw. erfindungsgemäße Deckbeschichtungszusammensetzungen erhalten.

Die erfindungsgemäßen Deckbeschichtungszusammensetzungen enthalten vorzugsweise soviel Aminoplastharz, daß das Gewichtsverhältnis, zwischen Polyacrylatharzfeststoff und Aminoplastharzfeststoff 60 : 40 bis 90 : 10, besonders bevorzugt 70 : 30 bis 85 : 15, beträgt.

Prinzipiell können alle Aminoplastharze, die sich mit dem erfindungsgemäßen Polyacrylatharz zu einer stabilen Deckbeschichtungszusammensetzung verarbeiten lassen, als Vernetzungsmittel eingesetzt werden. Vorzugsweise werden Melamin-Formaldehydharze, die mit aliphatischen Alkoholen, die vorzugsweise 1 bis 4 Kohlenstoffatomen pro Molekül enthalten, teilweise oder vollständig verethert sind, als Vernetzungsmittel eingesetzt.

Vor der Applikation werden die erfindungsgemäßen Deckbeschichtungszusammensetzungen auf Spritzviskosität (im allgemeinen 20 bis 40 sec. Auslaufzeit aus DIN-Becher 4 (DIN 53211 (1974))) und einem pH-Wert von 7,0 bis 8,5, vorzugsweise 7,2 bis 7,8 eingestellt.

Die erfindungsgemäßen Deckbeschichtungszusammensetzungen

– weisen bei Spritzviskosität einen so hohen Feststoffgehalt (20 bis 45 Gew.-%, vorzugsweise 32 bis 40 Gew.-%) auf, daß mit ein bis zwei Spritzgängen (Kreuzgänge) Lackfilme mit ausreichender Schichtdicke (die Dicke des eingebrannten Lackfilms sollte vorzugsweise zwischen 25 und 45 µm liegen) erhalten werden und
– liefern eingebrannte Lackfilme mit einem sehr guten Aussehen (guter Verlauf, hoher Glanz, guter Decklackstand...) und guten mechanisch-technologischen Eigenschaften und
– weisen einen verhältnismäßig niedrigen Anteil an organischen Cosolventien (weniger als 35 Gew.-%, bezogen auf den Gesamtfeststoffgehalt an Bindemitteln und Vernetzungsmitteln) auf.

Wenn die erfindungsgemäßen Deckbeschichtungszusammensetzungen zusammen mit wasserverdünnbaren Basisbeschichtungszusammensetzungen zur Herstellung von Metalleffektlackierungen verwendet werden, dann werden Metalleffektlackierungen erhalten, in denen die transparente Deckschicht besonders gut auf der Basisschicht haftet.

Die erfindungsgemäßen Deckbeschichtungszusammensetzungen können neben dem erfindungsgemäß eingesetzten Polyacrylatharz auch noch vernetzte Polymermikroteilchen, wie sie z.B. in der EP-A-38127 offenbart sind und/oder weitere verträgliche Harze wie z.B. wasserverdünnbare oder wasserlösliche Polyacrylatharze, Polyesterharze, Alkydharze oder Epoxidharzester enthalten, und sie können auch pigmentiert werden.

In den folgenden Beispielen wird die Erfindung näher erläutert:

A. Herstellung erfindungsgemäßer wasserverdünnbarer Polyacrylatharze

Tabelle 1

| Komponente | Monomere | zugegebene Mengen in Gewichtsteilen P1 | P2 | P3 |
|---|---|---|---|---|
| (a1) | Acrylsäure | 5,0 | 5,0 | 5,0 |
| (b1) | Butylacrylat | 22,0 | 22,0 | 22,0 |
| | Butylmethacrylat | 20,0 | 20,0 | 20,0 |
| | Methylmethacrylat | 15,0 | 15,0 | 15,0 |
| (b2) | 2-Hydroxipropylacrylat | 23,0 | 23,0 | 23,0 |
| (b3) | Styrol | 15,0 | 15,0 | 15,0 |

P1> In einem 4 l Stahlkessel, ausgestattet mit zwei Monomerzuläufen, einem Initiatorzulauf, Rührer, Thermometer, Ölheizung und Rückflußkühler werden 20 Gew.-Teile Butylglykol vorgelegt und auf 140°C aufgeheizt. Dann wird eine Lösung von 4,5 Gew.-Teilen Butylperbenzoat in 5 Gew.-Teilen Butylglykol in einer solchen Geschwindigkeit zugegeben, daß die Zugabe von 4 h, 30 min abgeschlossen ist. Mit Beginn der Zugabe der Butylperbenzoatlösung wird auch mit der Zugabe der Komponente (a1) begonnen (vgl. Tabelle 1). Die Komponente (a1) wird in einer solchen Geschwindigkeit zugegeben, daß die Zugabe nach 20 Minuten abgeschlossen ist. Nachdem die Komponente (a1) vollständig zugegeben worden ist, wird die Mischung aus (b1), (b2) und (b3) innerhalb von 3 h, 40 min. zugegeben. Danach wird das Reaktionsgemisch noch so lange auf 140°C gehalten, bis der Feststoffgehalt der Harzlösung mindestens 80 Gew.-% (1 h, 130°C) beträgt. Die so erhaltene Harzlösung wird mit Dimethylethanolamin bei 95°C bis zu einem Neutralisationsgrad von 80 % neutralisiert. Anschließend wird soviel Wasser zugegeben, daß der Feststoffgehalt der Dispersion etwa 60 Gew.-% beträgt.

P2> In einem 4 l Stahlkessel, ausgestattet mit zwei Monomerzuläufen, einem Initiatorzulauf, Rührer, Thermometer, Ölheizung und Rückflußkühler werden 20 Gew.-Teile Butylglykol vorgelegt und auf 140°C aufgeheizt. Dann wird eine Lösung von 4,5 Gew.-Teilen Butylperbenzoat in 5 Gew.-Teilen Butylglykol in einer solchen Geschwindigkeit zugegeben, daß die Zugabe nach 4 h, 30 min abgeschlossen ist.

Mit Beginn der Zugabe der Butylperbenzoatlösung wird auch mit der Zugabe von 50 Gew.-% der insgesamt einzusetzenden Menge des Gemisches aus (b1), (b2) und (b3) begonnen. Diese Teilmenge des Gemisches aus (b1), (b2) und (b3) wird in einer solchen Geschwindigkeit zugegeben, daß die Zugabe nach 1 h, 53 min. abgeschlossen ist. Nach Abschluß der Zugabe der ersten Teilmenge des Gemisches aus (b1), (b2) und (b3) werden 50 Gew.-% der insgesamt einzusetzenden Menge der Komponente (a1) innerhalb von 7 Minuten zugegeben. Danach werden die restlichen 50 Gew.-% der insgesamt einzusetzenden Menge des Gemisches aus

(b1), (b2) und (b3) innerhalb von 1 h 52 min. zugegeben. Nachdem die restlichen 50 Gew.-% der insgesamt einzusetzenden Menge des Gemisches aus (b1), (b2) und (b3) vollständig zugegeben worden sind, werden die restlichen 50 Gew.-% der insgesamt einzusetzenden Menge der Komponente (a1) innerhalb von 8 Minuten zugegeben. Danach. wird das Reaktionsgemisch noch so lange auf 140°C gehalten, bis der Feststoffgehalt der Harzlösung mindestens 80 Gew.-% (1 h, 130°C) beträgt.

Die so erhaltene Harzlösung wird mit Dimethylethanolamin bei 95°C bis zu einem Neutralisationsgrad von 80 % neutralisiert. Anschließend wird soviel Wasser zugegeben, daß der Feststoffgehalt der Dispersion etwa 60 Gew.-% beträgt.

P3> In einem 4 l Stahlkessel, ausgestattet mit zwei Monomerzuläufen, einem Initiatorzulauf, Rührer, Thermometer, Ölheizung und Rückflußkühler werden 20 Gew.-Teile Butylglykol vorgelegt und auf 140°C aufgeheizt. Dann wird eine Lösung von 4,5 Gew.-Teilen Butylperbenzoat in 5 Gew.-Teilen Butylglykol in einer solchen Geschwindigkeit zugegeben, daß die Zugabe nach 4 h, 30 min. abgeschlossen ist. Mit Beginn der Zugabe der Butylperbenzoatlösung wird auch mit der Zugabe von 33,3 Gew.-% der insgesamt einzusetzenden Menge an Komponente (a1) (Teilmenge 1) begonnen. Die Teilmenge 1 wird in einer solchen Geschwindigkeit zugegeben, daß die Zugabe nach 10 Minuten abgeschlossen ist. Nach Abschluß der Zugabe der Teilmenge 1 werden 50 Gew.-% der insgesamt einzusetzenden Menge des Gemisches aus (b1), (b2) und (b3) (Teilmenge 2) innerhalb von 1 h, 55 min. zugegeben. Nach vollständiger Zugabe der Teilmenge 2 werden 33,3 Gew.-% der insgesamt einzusetzenden Menge an Komponente (a1) (Teilmenge 3) innerhalb von 10 Minuten zugegeben. Nach Abschluß der Zugabe der Teilmenge 3 werden die restlichen 50 Gew.-% der insgesamt einzusetzenden Menge des Gemisches aus (b1), (b2) und (b3) (Teilmenge 4) innerhalb von 1 h, 55 min zugegeben. Nach vollständiger Zugabe der Teilmenge 4 werden schließlich die restlichen 33,33 Gew.-% der insgesamt einzusetzenden Menge an Komponente (a1) (Teilmenge 5) innerhalb von 10 Minuten zugegeben. Danach wird das Reaktionsgemisch noch so lange auf 140°C gehalten, bis der Feststoffgehalt der Harzlösung mindestens 80 Gew.-% (1 h, 130°C) beträgt.

Die so erhaltene Harzlösung wird mit Dimethylethanolamin bei 95°C bis zu einem Neutralisationsgrad von 80 % neutralisiert. Anschließend wird soviel Wasser zugegeben, daß der Feststoffgehalt der Dispersion etwa 60 Gew.-% beträgt.

Die erhaltenen Dispersionen zeigen folgende Kennzahlen:

Tabelle 2

| | P1 | P2 | P3 |
|---|---|---|---|
| Festkörper (in Gew.-%: 1 h, 130°C) | 59,6 | 59,0 | 59,6 |
| Säurezahl | 29,9 | 38,9 | 33,0 |
| Neutralisationsgrad (%) | 80 | 80 | 80 |
| OH-Zahl | 100 | 100 | 100 |
| Teilchengröße 1) (nm) | 119 | 190 | 67 |

1) Die Teilchengröße wurde über Laserlichtstreuung bestimmt. Gerät: Malvern Autosizer 2C.

B. Herstellung erfindungsgemäßer transparenter wäßriger Deckbeschichtungszusammensetzung

Aus 60,00 Gew.-% einer gemäß Punkt A hergestellten Polyacrylatdispersion, 29,95 Gew.-% destilliertem Wasser, 10,00 Gew.-% einer 90 %igen Lösung eines handelsüblichen wasserverdünnbaren Melamin-Formaldehydharzes in Isobutanol (Cymel 327) und 0,05 Gew.-% eines handelsüblichen Verlaufsmittels (Fluorad FC 430) werden transparente Deckbeschichtungszusammensetzungen hergestellt und mit einer 10 %igen wäßrigen Dimethylethanolaminlösung und destilliertem Wasser auf Spritzviskosität (24 s Auslaufzeit aus DIN-Becher 4 (DIN 53211 (1974))) und einen pH-Wert von 7,4 bis 7,5 eingestellt. Die Deckbeschichtungszusammensetzungen enthalten 20 Gew.-% an organischen Cosolventien, bezogen auf Gesamtfeststoffgehalt an Polyacrylatharz und Melamin-Formaldehydharz.

C. Applikation der erfindungsgemäßen transparenten Deckbeschichtungszusammensetzungen und Prüfung der eingebrannten Lackfilme

Auf einem mit einer handelsüblichen Elektrotauchlackierung und einen handelsüblichen Füller beschichteten phosphatiertem Stahlblech wird eine wasserverdünnbare, mit Aluminiumplättchen pigmentierte Basisbeschichtungszusammensetzung gemäß EP-A-279813 so appliziert, daß eine Trockenfilmdicke von 12 - 15 µm erhalten wird. Die applizierte Basisbeschichtungszusammensetzung wird 10 min. bei Raumtemperatur und 10 min. bei 80°C getrocknet. Dann wird eine gemäß Punkt B erhaltene Deckbeschichtungszusammensetzung in zwei Kreuzgängen mit einer Minute Zwischenablüftzeit auf die Basisschicht gespritzt. Schließlich wird 20 min. bei Raumtemperatur getrocknet und 30 min. bei 130°C im Umluftofen eingebrannt. Die so erhaltenen mehrschichtigen Überzüge wurden mehreren Prüfungen unterzogen. Die Prüfergebnisse sind in folgender Tabelle zusammengefaßt:

Tabelle 3

| | P1 | P2 | P3 |
|---|---|---|---|
| Applikationsfeststoffgehalt (1 h 130°C in Gew.-%) | 41,0 | 35,0 | 36,0 |
| Dicke der transparenten Deckschicht (µm) | 31 | 30 | 30 |
| Gitterschnitt (1) | 0-1 | 0-1 | 0 |
| Glanz (2) | 86 | 86 | 86 |

(1) Prüfung nach din 53151 inclusive Tesaabriß-Test

(2) Glanzgrad nach DIN 67530, Winkel 20°

B. Vergleichsbeispiel

Die zur Herstellung der erfindungsgemäßen Polyacrylatharze P1 und P3 eingesetzten Monomere (a1), (b1), (b2) und (b3) werden gemischt und polymerisiert. Die Polymerisationsbedingungen sind die gleichen wie bei der Herstellung der erfindungsgemäßen Polyacrylatharze P1 und P3. Der einzige Unterschied zur Herstellung der erfindungsgemäßen Polyacrylatharze besteht darin, daß die Komponente (a1) nicht vor der Mischung aus (b1), (b2) und (b3) wie bei P1 und nicht alternierend wie bei P3, sondern zusammen mit (b1), (b2) und (b3) zugegeben wird. Eine aus dem so hergestellten Polyacrylatharz V gemäß B hergestellte wäßrige Deckbeschichtungszusammensetzung weist bei einer Viskosität von 24 DIN-Sekunden (Auslaufzeit aus DIN

Becher 4 (DIN 53211 (1974))) und einem pH-Wert von 7,4 bis 7,5 lediglich einen Feststoffgehalt von 24,1 Gew.-% auf.
Das folgende Schaubild (Fig. 1) zeigt die Viskositäten der gemäß A hergestellten und mit Wasser verdünnten Polyacrylatdispersionen P1 und P3 in Abhängigkeit vom Feststoffgehalt der Dispersionen im Vergleich zu einer analogen Dispersion des Polyacrylatharzes V (pH-Wert der Dispersionen: 7,8).
Es wird deutlich, daß die Viskositäten der erfindungsgemäßen Polyacrylatharzdispersionen P1 und P3 bei Feststoffgehalten von 25 bis etwa 53 Gew.-% tiefer liegen als die Viskosität der Dispersion des Polyacrylatharzes V.

## Patentansprüche

1. Verfahren zur Herstellung eines mehrschichtigen schützenden und/oder dekorativen Überzuges auf einer Substratoberfläche, bei dem
(1) eine geeignete pigmentierte Basisbeschichtungszusammensetzung auf die Substratoberfläche aufgebracht wird
(2) aus der in Stufe (1) aufgebrachten Zusammensetzung ein Polymerfilm gebildet wird
(3) auf die so erhaltenen Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend
(4) die Basisschicht zusammen mit der Deckschicht eingebrannt wird,
dadurch gekennzeichnet, daß die Deckbeschichtungszusammensetzung ein wasserverdünnbares Polyacrylatharz als Bindemittel enthält, das erhältlich ist, indem
(I)
(a1) 60 - 100 Gew.-% eines mindestens eine Carboxylgruppe pro Molekül tragenden, mit (b1), (b2) und (b3) copolymerisierbaren ethylenisch ungesättigten Monomeren oder eines Gemisches aus solchen Monomeren zusammen mit
(a2) 0 - 40 Gew.-% eines carboxylgruppenfreien, mit (b1), (b2), (b3) und (a1) copolymerisierbaren ethylenisch ungesättigten Monomers oder eines Gemisches aus solchen Monomeren und
ein Gemisch (b), bestehend aus
(b1) einem mit (b2), (b3), (a1) und (a2) copolymerisierbaren, im wesentlichen carboxylgruppenfreien (Meth)acrylsäureester oder einem Gemisch aus solchen (Meth)acrylsäureestern und
(b2) einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls
(b3) einem mit (b1), (b2), (a1) und (a2) copolymerisierbaren, im wesentlichen carboxylgruppenfreien ethylenisch ungesättigten Monomeren oder einem Gemisch aus solchen Monomeren
nacheinander oder in Teilmengen alternierend zu einem organischen Lösemittel oder Lösemittelgemisch gegeben werden und in Gegenwart mindestens eines Polymerisationsinitiators polymerisiert werden und
(II)
nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugs- weise -20°C bis +40°C, aufweist.

2. Wäßrige Beschichtungszusammensetzungen, enthaltend ein wasserverdünnbares Polyacrylatharz als Bindemittel und ein Aminoplastharz als Vernetzungsmittel, dadurch gekennzeichnet, daß das wasserverdünnbare Polyacrylatharz erhältlich ist, indem
(I)
(a1) 60 - 100 Gew.-% eines mindestens eine Carboxylgruppe pro Molekül tragenden, mit (b1), (b2) und (b3) copolymerisierbaren ethylenisch ungesättigten Monomeren oder eines Gemisches aus solchen Monomeren zusammen mit
(a2) 0 - 40 Gew.-% eines carboxylgruppenfreien, mit (b1), (b2), (b3) und (a1) copolymerisierbaren ethylenisch ungesättigten Monomers oder eines Gemisches aus solchen Monomeren und
ein Gemisch (b), bestehend aus
(b1) einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2) einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3) einem mit (b1), (b2), (a1) und (a2) copolymerisierbaren, im wesentlichen carboxylgruppenfreien ethylenisch ungesättigten Monomeren oder einem Gemisch aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

3. Verfahren nach Anspruch 1, dadurch gekennzeichnet, daß in Stufe (1) eine wäßrige, vorzugsweise Metallpigmente enthaltende Basisbeschichtungszusammensetzung aufgebracht wird.

4. Verfahren oder Beschichtungszusammensetzungen nach einem der Ansprüche 1 bis 3, dadurch gekennzeichnet, daß 100 Gew.-% der Komponente (a1) eingesetzt werden.

5. Verfahren oder Beschichtungszusammensetzungen nach Anspruch 4, dadurch gekennzeichnet, daß zuerst eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zugegeben wird, danach eine aus 30 bis 70 Gew.-%, vorzugsweise eine aus 40 bis 60 Gew.-%, besonders bevorzugt eine aus 50 Gew.-% der ingesamt einzusetzenden Menge an Komponente (a1) bestehende Teilmenge der Komponente (a1) (Teilmenge 2) zugegeben wird, danach eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zugegeben wird und schließlich eine aus 30 bis 70 Gew.-%, vorzugsweise eine aus 40 bis 60 Gew.-%, besonders bevorzugt eine aus 50 Gew.-% der insgesamt einzusetzenden Menge an Komponente (a1) bestehende Teilmenge der Komponente (a1) (Teilmenge 4) zugegeben wird, wobei die Summe der Gewichtsanteile der Teilmengen 1 und 3 und die Summe der Gewichtsanteile der Teilmengen 2 und 4 stets 100 Gew.-% beträgt.

6. Verfahren oder Beschichtungszusammensetzungen nach Anspruch 5, dadurch gekennzeichnet, daß bei einer Temperatur von 80 bis 160°C, vorzugsweise 120 bis 160°C in Gegenwart mindestens eines freie Radikale bildenden Initiators polymerisiert wird und daß die Zugabe der Teilmenge 1 1 bis 4, vorzugswiese 1 1/2 bis 3 Stunden, die Zugabe der Teilmenge 2 5 bis 30, vorzugsweise 7 bis 20 Minuten, die Zugabe der Teilmenge 3 1 bis 4, vorzugsweise 1 1/2 bis 3 Stunden und die Zugabe der Teilmenge 4 5 bis 30, vorzugsweise 7 bis 20 Minuten dauert.

7. Wasserverdünnbare Polyacrylatharze, dadurch gekennzeichnet, daß sie erhältlich sind, indem

(I)

(a1) 60 - 100 Gew.-% eines mindestens eine Carboxylgruppe pro Molekül tragenden, mit (b1), (b2) und (b3) copolymerisierbaren ethylenisch ungesättigten Monomeren oder eines Gemisches aus solchen Monomeren zusammen mit

(a2) 0 - 40 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1) einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2) einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3) einem mit (b1), (b2), (a1) und (a2) copolymerisierbaren, im wesentlichen carboxylgruppenfreien ethylenisch ungesättigten Monomeren oder einem Gemisch aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise

25 bis 50 und eine Glasübergangstemperatur ($T_G$) von -40°C bis +60°C, vorzugsweise -20°C bis +40°C, aufweist.

8. Verfahren zur Herstellung von wasserverdünnbaren Polyacrylatharzen, dadurch gekennzeichnet, daß

(I)

(a1) 60 - 100 Gew.-% eines mindestens eine Carboxylgruppe pro Molekül tragenden, mit (b1), (b2) und (b3) copolymerisierbaren ethylenisch ungesättigten Monomeren oder eines Gemisches aus solchen Monomeren zusammen mit

(a2) 0 - 40 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1) einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2) einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3) einem mit (b1), (b2), (a1) und (a2) copolymerisierbaren, im wesentlichen carboxylgruppenfreien ethylenisch ungesättigten Monomeren oder einem Gemisch aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangs- temperatur ($T_G$) von -40°C bis +60°C, vorzugsweise -20°C bis +40°C, aufweist.

9. Polyacrylatharz oder Verfahren nach Anspruch 7 oder 8, dadurch gekennzeichnet, daß 100 Gew.-% der Komponente (a1) eingesetzt werden.

10. Polyacrylatharz oder Verfahren nach Anspruch 9, dadurch gekennzeichnet, daß zuerst eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zugegeben wird, danach eine aus 30 bis 70 Gew.-% vorzugsweise eine aus 40 bis 60 Gew.-%, besonders bevorzugt eine aus 50 Gew.-% der insgesamt einzusetzenden Menge an Komponente (a1) bestehende Teilmenge der Komponente (a1) (Teilmenge 2) zugegeben wird, danach eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zugegeben wird, und schließlich eine aus 30 bis 70 Gew.-%, vorzugsweise eine aus 40 bis 60 Gew.-%, besonders bevorzugt eine aus 50 Gew.-% der insgesamt einzusetzenden Menge an Komponente (a1) bestehende Teilmenge der Komponente (a1) (Teilmenge 4) zugegeben wird, wobei die Summe der Gewichtsanteile der Teilmengen 1 bis 3 und die Summe der Gewichtsanteile der Teilmengen 2 und 4 stets 100 Gew.-% beträgt.

## Claims

1. Process for the preparation of a multicoat protective and/or decorative coating on a substrate surface, in which process

(1) a suitable pigmented basecoat composition is applied to the substrate surface,

(2) the composition applied in stage (1) forms a polymeric film,

(3) a clear aqueous topcoat composition comprising a water-thinnable polyacrylate resin as binder and an aminoplast resin as crosslinking agent is applied to the basecoat obtained in this manner, and subsequently

(4) the basecoat and the topcoat are baked together, characterised in that the topcoat composition comprises a water-thinnable polyacrylate resin as binder, which resin can be obtained

(I) by adding

(a1) 60 - 100% by weight of an ethylenically unsaturated monomer which contains at least one carboxyl group per molecule and is copolymerisable with (b1), (b2) and (b3), or a mixture of such monomers, together with

(a2) 0 - 40% by weight of an ethylenically unsaturated monomer which is free from carboxyl groups and

is copolymerisable with (b1), (b2), (b3) and (a1), or a mixture of such monomers, and a mixture (b) consisting of

(b1) a (meth)acrylic ester which is copolymerisable with -(b2), (b3), (a1) and (a2) and is essentially free from carboxyl groups, or a mixture of such (meth)acrylic esters, and

(b2) an ethylenically unsaturated monomer which is copolymerisable with (b1), (b3), (a1) and (a2), contains at least one hydroxyl group per molecule and is essentially free from carboxyl groups, or a mixture of such monomers, and, if desired,

(b3) an ethylenically unsaturated monomer which is copolymerisable with (b1), (b2), (a1) and (a2) and is essentially free from carboxyl groups, or a mixture of such monomers to an organic solvent or mixture of solvents either successively or alternately in part amounts, and polymerising the mixture in the presence of at least one polymerization initiator, and

(II)

by at least partly neutralising the resultant polyacrylate resin after the termination of the polymerisation and dispersing it in water, the total of the weight proportions of (a1) and (a2) being always 100% by weight and the type and amount of (b1), (b2), (b3), (a1) and (a2) being chosen such that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

2. Aqueous coating composition which comprises a water-thinnable polyacrylate resin as binder and an aminoplast resin as crosslinking agent, characterised in that the water-thinnable polyacrylate resin can be obtained

(I) by adding

(a1) 60 - 100% by weight of an ethylenically unsaturated monomer which contains at least one carboxyl group per molecule and is copolymerisable with (b1), (b2) and (b3), or a mixture of such monomers, together with

(a2) 0 - 40% by weight of an ethylenically unsaturated monomer which is free from carboxyl groups and is copolymerisable with (b1), (b2), (b3) and (a1), or a mixture of such monomers, and a mixture (b) consisting of

(b1) a (meth)acrylic ester which is copolymerisable with (b2), (b3), (a1) and (a2) and is essentially free from carboxyl groups, or a mixture of such (meth) acrylic esters, and

(b2) an ethylenically unsaturated monomer which is copolymerisable with (b1), (b3), (a1) and (a2), contains at least one hydroxyl group per molecule and is essentially free from carboxyl groups, or a mixture of such monomers, and, if desired,

(b3) an ethylenically unsaturated monomer which is copolymerisable with (b1), (b2), (a1) and (a2) and is essentially free from carboxyl groups, or a mixture of such monomers

to an organic solvent or mixture of solvents either successively or alternately in part amounts, and polymerising the mixture in the presence of at least one polymerisation initiator, and

(II)

by at least partly neutralising the resultant polyacrylate resin after the termination of the polymerisation and dispersing it in water, the total of the weight proportions of (a1) and (a2) being always 100% by weight and the type and amount of (b1), (b2), (b3), (a1) and (a2) being chosen such that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

3. Process according to Claim 1, characterised in that an aqueous basecoat composition, preferably comprising metallic pigments, is applied in stage (1).

4. Process or coating composition according to any one of Claims 1 to 3, characterised in that 100% by weight of the component (a1) is used.

5. Process or coating composition according to Claim 4, characterised in that an amount of the component (b) (amount 1) consisting of 30 to 70% by weight, preferably 40 to 60% by weight, particularly preferably 50% by weight, of the total amount of the component (b) to be used is added first, after which an amount of the component (a1) (amount 2) consisting of 30 to 70% by weight, preferably 40 to 60% by weight, particularly preferably 50% by weight, of the total amount of the component (a1) to be used is added, after which an amount of the component (b) (amount 3) consisting of 30 to 70% by weight, preferably 40 to 60% by weight, particularly preferably 50% by weight, of the total amount of the component (b) to be used is added and finally an amount of the component (a1) (amount 4) consisting of 30 to 70% by weight, preferably 40 to 60% by weight, particularly preferably 50% by weight, of the total amount of the component (a1) to be used is added, the total of the weight proportions of amounts 1 and 3 and the total of the weight proportions of amounts 2 and 4 always being 100% by weight.

6. Process or coating composition according to Claim 5, characterised in that polymerisation takes place

at a temperature of 80 to 160°C, preferably 120 to 160°C, in the presence of at least one free-radical initiator and the addition of the amount 1 lasts 1 to 4, preferably 1.5 to 3, hours, the addition of the amount 2 lasts 5 to 30, preferably 7 to 20, minutes, the addition of the amount 3 lasts 1 to 4, preferably 1.5 to 3, hours and the addition of the amount 4 lasts 5 to 30, preferably 7 to 20, minutes.

7. Water-thinnable polyacrylate resin can be obtained

(I) by adding

(a1) 60 - 100% by weight of an ethylenically unsaturated monomer which contains at least one carboxyl group per molecule and is copolymerisable with (b1), (b2) and (b3), or a mixture of such monomers, together with

(a2) 0 - 40% by weight of an ethylenically unsaturated monomer which is free from carboxyl groups and is copolymerisable with (b1), (b2), (b3) and (a1), or a mixture of such monomers, and a mixture (b) consisting of

(b1) a (meth)acrylic ester which is copolymerisable with (b2), (b3), (a1) and (a2) and is essentially free from carboxyl groups, or a mixture of such (meth)acrylic esters, and

(b2) an ethylenically unsaturated monomer which is copolymerisable with (b1), (b3), (a1) and (a2), contains at least one hydroxyl group per molecule and is essentially free from carboxyl groups, or a mixture of such monomers, and, if desired,

(b3) an ethylenically unsaturated monomer which is copolymerisable with (b1), (b2), (a1) and (a2) and is essentially free from carboxyl groups, or a mixture of such monomers

to an organic solvent or mixture of solvents either successively or alternately in part amounts, and polymerising the mixture in the presence of at least one polymerisation initiator, and

(II)

by at least partly neutralising the resultant polyacrylate resin after the termination of the polymerisation and dispersing it in water, the total of the weight proportions of (a1) and (a2) being always 100% by weight and the type and amount of (b1), (b2), (b3), (a1) and (a2) being chosen such that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

8. Process for the preparation of water-thinnable polyacrylate resins, wherein

(I)

(a1) 60 - 100% by weight of an ethylenically unsaturated monomer which contains at least one carboxyl group per molecule and is copolymerisable with (b1), (b2) and (b3), or a mixture of such monomers, together with

(a2) 0 - 40% by weight of an ethylenically unsaturated monomer which is free from carboxyl groups and is copolymerisable with (b1), (b2), (b3) and (a1), or a mixture of such monomers, and a mixture (b) consisting of

(b1) a (meth)acrylic ester which is copolymerisable with (b2), (b3), (a1) and (a2) and is essentially free from carboxyl groups, or a mixture of such (meth) acrylic esters, and

(b2) an ethylenically unsaturated monomer which is copolymerisable with (b1), (b3), (a1) and (a2), contains at least one hydroxyl group per molecule and is essentially free from carboxyl groups, or a mixture of such monomers, and, if desired,

(b3) an ethylenically unsaturated monomer which is copolymerisable with (b1), (b2), (a1) and (a2) and is essentially free from carboxyl groups, or a mixture of such monomers

are added to an organic solvent or mixture of solvents either successively or alternately in part amounts, and are polymerised in the presence of at least one polymerisation initiator, and

(II)

the resultant polyacrylate resin is at least partly neutralised after the termination of the polymerisation and is dispersed in water, the total of the weight proportions of (a1) and (a2) being always 100% by weight and the type and amount of (b1), (b2), (b3), (a1) and (a2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

9. Polyacrylate resin or process according to Claim 7 or 8, characterised in that 100% by weight of the component (a1) is used.

10. Polyacrylate resin or process according to Claim 9, characterised in that an amount of the component (b) (amount 1) consisting of 30 to 70% by weight, preferably 40 to 60% by weight, particularly preferably 50% by weight, of the total amount of the component (b) to be used is added first, after which an amount of the component (a1) (amount 2) consisting of 30 to 70% by weight, preferably 40 to 60% by weight, particularly preferably 50% by weight, of the total amount of the component (a1) to be used is added, after which an amount of the component (b) (amount 3) consisting of 30 to 70% by weight, preferably 40 to 60% by weight, particularly

preferably 50% by weight, of the total amount of the component (b) to be used is added and finally an amount of the component (a1) (amount 4) consisting of 30 to 70% by weight, preferably 40 to 60% by weight, particularly preferably 50% by weight, of the total amount of the component (a1) to be used is added, the total of the weight proportions of amounts 1 to (sic) 3 and the total of the weight proportions of amounts 2 and 4 being always 100% by weight.

## Revendications

1. Procédé de fabrication d'un revêtement à plusieurs couches, protecteur et/décoratif, sur une surface de substrat, suivant lequel :

(1) on applique, sur la surface de substrat, une composition de revêtement de base pigmentée appropriée ;

(2) à partir de la composition appliquée à l'étape (1), on forme un film de polymère ;

(3) sur la couche de base ainsi obtenue, on applique une composition de revêtement de recouvrement, aqueuse, transparente, contenant une résine de polyacrylate diluable dans l'eau en tant que liant et une résine aminoplaste en tant qu'agent réticulant ; puis

(4) on soumet à une cuisson la couche de base conjointement avec la couche de recouvrement,

caractérisé par le fait que la composition de revêtement de base contient une résine de polyacrylate diluable dans l'eau en tant que liant, résine qui peut être obtenue

(I)

en ajoutant à un solvant organique ou à un mélange de solvants organiques, de façon successive ou en quantités partielles de façon alternée :

(a1) 60-100% en poids d'un monomère à insaturation éthylénique, copolymérisable avec (b1), (b2) et (b3), portant au moins un groupe carboxyle par molécule, ou un mélange de tels monomères, conjointement avec

(a2) 0-40% en poids d'un monomère à insaturation éthylénique, copolymérisable avec (b1), (b2), (b3) et (a1), exempt de groupes carboxyle, ou un mélange de tels monomères et un mélange (b), se composant de :

(b1) un ester de l'acide (méth)acrylique sensiblement exempt de groupes carboxyle, copolymérisable avec (b2), (b3), (a1) et (a2), ou un mélange de tels esters de l'acide (méth)acrylique ; et

(b2) un monomère à insaturation éthylénique, copolymérisable avec (b1), (b3), (a1) et (a2), qui porte au moins un groupe hydroxyle par molécule et qui est sensiblement exempt de groupes carboxyle, ou un mélange de tels monomères et, le cas échéant,

(b3) un monomère à insaturation éthylénique, sensiblement exempt de groupes carboxyle, copolymérisable avec (b1), (b2), (a1) et (a2), ou un mélange de tels monomères,

et en polymérisant en présence d'au moins un initiateur de polymérisation, et

(II)

après l'achèvement de la polymérisation, en neutralisant au moins partiellement la résine de polyacrylate obtenue et en la dispersant dans l'eau, la somme des fractions pondérales de (a1) et (a2) donnant toujours 100% en poids, et (b1), (b2), (b3), (a1) et (a2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

2. Compositions aqueuses de revêtement, contenant une résine de polyacrylate diluable dans l'eau en tant que liant et une résine aminoplaste en tant qu'agent réticulant, caractérisées par le fait que la résine de polyacrylate diluable dans l'eau peut être obtenue :

(I)

en ajoutant à un solvant organique ou à un mélange de solvants organiques, de façon successive ou en quantités partielles de façon alternée :

(a1) 60-100% en poids d'un monomère à insaturation éthylénique, copolymérisable avec (b1), (b2) et (b3), portant au moins un groupe carboxyle par molécule, ou un mélange de tels monomères, conjointement avec

(a2) 0-40% en poids d'un monomère à insaturation éthylénique, copolymérisable avec (b1), (b2), (b3) et (a1), exempt de groupes carboxyle, ou un mélange de tels monomères et un mélange (b), se composant de :

(b1) un ester de l'acide (méth)acrylique sensiblement exempt de groupes carboxyle, copolymérisable avec (b2), (b3), (a1) et (a2), ou un mélange de tels esters de l'acide (méth)acrylique ; et

(b2) un monomère à insaturation éthylénique, copolymérisable avec (b1), (b3), (a1) et (a2), qui porte au

moins un groupe hydroxyle par molécule et qui est sensiblement exempt de groupes carboxyle, ou un mélange de tels monomères et, le cas échéant

(b3) un monomère à insaturation éthylénique, sensible ment exempt de groupes carboxyle, copolymérisable avec (b1), (b2), (a1) et (a2), ou un mélange de tels monomères,

et en polymérisant en présence d'au moins un initiateur de polymérisation, et

(II)

après l'achèvement de la polymérisation, en neutralisant au moins partiellement la résine de polyacrylate obtenue et en la dispersant dans l'eau, la somme des fractions pondérales de (a1) et (a2) donnant toujours 100% en poids, et (b1), (b2), (b3), (a1) et (a2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

3. Procédé selon la revendication 1, caractérisé par le fait qu'à l'étape (1), on applique une composition aqueuse de revêtement de base contenant, de préférence, des pigments métalliques.

4.- Procédé ou compositions de revêtement selon l'une quelconque des revendications 1 à 3, caractérisés par le fait que l'on utilise 100% en poids du composant (a1).

5. Procédé ou compositions de revêtement selon la revendication 4, caractérisés par le fait que l'on ajoute tout d'abord une quantité partielle du composant (b) (quantité partielle 1) se composant de 30 à 70% en poids, de préférence, une quantité de 40 à 60%, de façon particulièrement préférée, une quantité de 50% en poids, de la quantité du composant (b) à utiliser au total, qu'on ajoute ensuite une quantité partielle du composant (a1) (quantité partielle 2) se composant de 30 à 70% en poids, de préférence, une quantité de 40 à 60% en poids, de façon particulièrement préférée, une quantité de 50% en poids de la quantité de composant (a1) à utiliser au total, qu'on ajoute ensuite une quantité partielle du composant (b) (quantité partielle 3) se composant de 30 à 70% en poids, de préférence, une quantité de 40 à 60% en poids, de façon particulièrement préférée, une quantité de 50% en poids de la quantité de composant (b) à utiliser au total, et qu'on ajoute enfin une quantité partielle du composant (a1) (quantité partielle 4) de 30 à 70% en poids, de préférence une quantité de 40 à 60% en poids, de façon particulièrement préférée, une quantité de 50% en poids de la quantité de composant (a1) à utiliser au total, la somme des fractions pondérales des quantités partielles 1 et 3 et la somme des fractions pondérales des quantités partielles 2 et 4 s'élevant toujours à 100% en poids.

6. Procédé ou compositions de revêtement selon la revendication 5, caractérisés par le fait qu'on polymérise à une température de 80 à 160°C, de préférence de 120 à 160°C en présence d'au moins un initiateur formant des radicaux libres, et que l'addition de la quantité partielle 1, dure, 1 à 4, de préférence 1 1/2 à 3 heures, l'addition de la quantité partielle 2, 5 à 30, de préférence 7 à 20 minutes, l'addition de la quantité partielle 3, 1 à 4, de préférence 1 1/2 à 3 heures, et l'addition de la quantité partielle 4, 5 à 30, de préférence 7 à 20 minutes.

7. Résines de polyacrylate diluables dans l'eau, caractérisées par le fait qu'elles peuvent être obtenues :

(I)

en ajoutant à un solvant organique ou à un mélange de solvants organiques, de façon successive ou en quantités partielles de façon alternée :

(a1) 60-100% en poids d'un monomère à insaturation éthylénique, copolymérisable avec (b1), (b2) et (b3), portant au moins un groupe carboxyle par molécule, ou un mélange de tels monomères, conjointement avec

(a2) 0-40% en poids d'un monomère à insaturation éthylénique, copolymérisable avec (b1), (b2), (b3) et (a1), exempt de groupes carboxyle, ou un mélange de tels monomères et un mélange (b), se composant de :

(b1) un ester de l'acide (méth)acrylique sensiblement exempt de groupes carboxyle, copolymérisable avec (b2), (b3), (a1) et (a2), ou un mélange de tels esters de l'acide (méth)acrylique ; et

(b2) un monomère à insaturation éthylénique, copolymérisable avec (b1), (b3), (a1) et (a2), qui porte au moins un groupe hydroxyle par molécule et qui est sensiblement exempt de groupes carboxyle, ou un mélange de tels monomères, et, le cas échéant,

(b3) un monomère à insaturation éthylénique, sensible ment exempt de groupes carboxyle, copolymérisable avec (b1), (b2), (a1) et (a2), ou un mélange de tels monomères,

et en polymérisant en présence d'au moins un initiateur de polymérisation, et

(II)

après l'achèvement de la polymérisation, en neutralisant au moins partiellement la résine de polyacrylate obtenue et en la dispersant dans l'eau, la somme des fractions pondérales de (a1) et (a2) donnant toujours 100% en poids, et (b1), (b2), (b3), (a1) et (a2) étant choisis en type et en quantité de telle sorte que la résine de polyacrylate présente un indice d'hydroxyle de 40 à 200, de préférence, de 60 à 140, un indice

d'acide de 20 à 100, de préférence, de 25 à 50, et une température de transition vitreuse ($T_G$) de -40°C à +60°C, de préférence, de -20°C à +40°C.

8. Procédé de fabrication de résines de polyacrylate diluables dans l'eau, caractérisé par le fait que :

(I)

on ajoute à un solvant organique ou à un mélange de solvants organiques, de façon successive ou en quantités partielles de façon alternée :

(a1) 60-100% en poids d'un monomère à insaturation éthylénique, copolymérisable avec (b1), (b2) et (b3), portant au moins un groupe carboxyle par molécule, ou un mélange de tels monomères, conjointement avec

(a2) 0-40% en poids d'un monomère à insaturation éthylénique, copolymérisable avec (b1), (b2), (b3) et (a1), exempt de groupes carboxyle, ou un mélange de tels monomères,et un mélange (b), se composant de :

(b1) un ester de l'acide (méth)acrylique sensiblement exempt de groupes carboxyle, copolymérisable avec (b2), (b3), (a1) et (a2), ou un mélange de tels esters de l'acide (méth)acrylique ; et

(b2) un monomère à insaturation éthylénique, copolymérisable avec (b1), (b3), (a1) et (a2), qui porte au moins un groupe hydroxyle par molécule et qui est sensiblement exempt de groupes carboxyle, ou un mélange de tels monomères, et, le cas échéant,

(b3) un monomère à insaturation éthylénique, sensible ment exempt de groupes carboxyle, copolymérisable avec (b1), (b2), (a1) et (a2), ou un mélange de tels monomères,

et on polymérise en présence d'au moins un initiateur de polymérisation, et

(II)

après l'achèvement de la polymérisation, on neutralise au moins partiellement la résine de polyacrylate obtenue et on la disperse dans l'eau, la somme des fractions pondérales de (a1) et (a2) donnant toujours 100% en poids, et (b1), (b2), (b3), (a1) et (a2) étant choisis en type et en quantité de telle sorte que la résine de polyacrylate présente un indice d'hydroxyle de 40 à 200, de préférence, de 60 à 140, un indice d'acide de 20 à 100, de préférence, de 25 à 50, et une température de transition vitreuse ($T_G$) de -40°C à +60°C, de préférence, de -20°C à +40°C.

9. Résine de polyacrylate ou procédé selon l'une quelconque des revendications 7 ou 8, caractérisé(e) par le fait qu'on utilise 100% en poids du composant (a1).

10.- Résine de polyacrylate ou procédé selon la revendication 9, caractérisé(e) par le fait que l'on ajoute tout d'abord une quantité partielle du composant (b) (quantité partielle 1) se composant de 30 à 70% en poids, de préférence, une quantité de 40 à 60%, de façon particulièrement préférée, une quantité de 50% en poids, de la quantité du composant (b) à utiliser au total, qu'on ajoute ensuite une quantité partielle du composant (a1) (quantité partielle 2) se composant de 30 à 70% en poids, de préférence, une quantité de 40 à 60% en poids, de façon particulièrement préférée, une quantité de 50% en poids, de la quantité de composant (a1) à utiliser au total, qu'on ajoute ensuite une quantité partielle du composant (b) (quantité partielle 3) se composant de 30 à 70% en poids, de préférence, une quantité de 40 à 60% en poids, de façon particulièrement préférée, une quantité de 50% en poids de la quantité de composant (b) à utiliser au total, et qu'on ajoute enfin une quantité partielle du composant (a1) (quantité partielle 4) de 30 à 70% en poids, de préférence une quantité de 40 à 60% en poids, de façon particulièrement préférée, une quantité de 50% en poids,de la quantité de composant (a1) à utiliser au total, la somme des fractions pondérales des quantités partielles 1 et 3 et la somme des fractions pondérales des quantités partielles 2 et 4 s'élevant toujours à 100% en poids.

Fig. 1

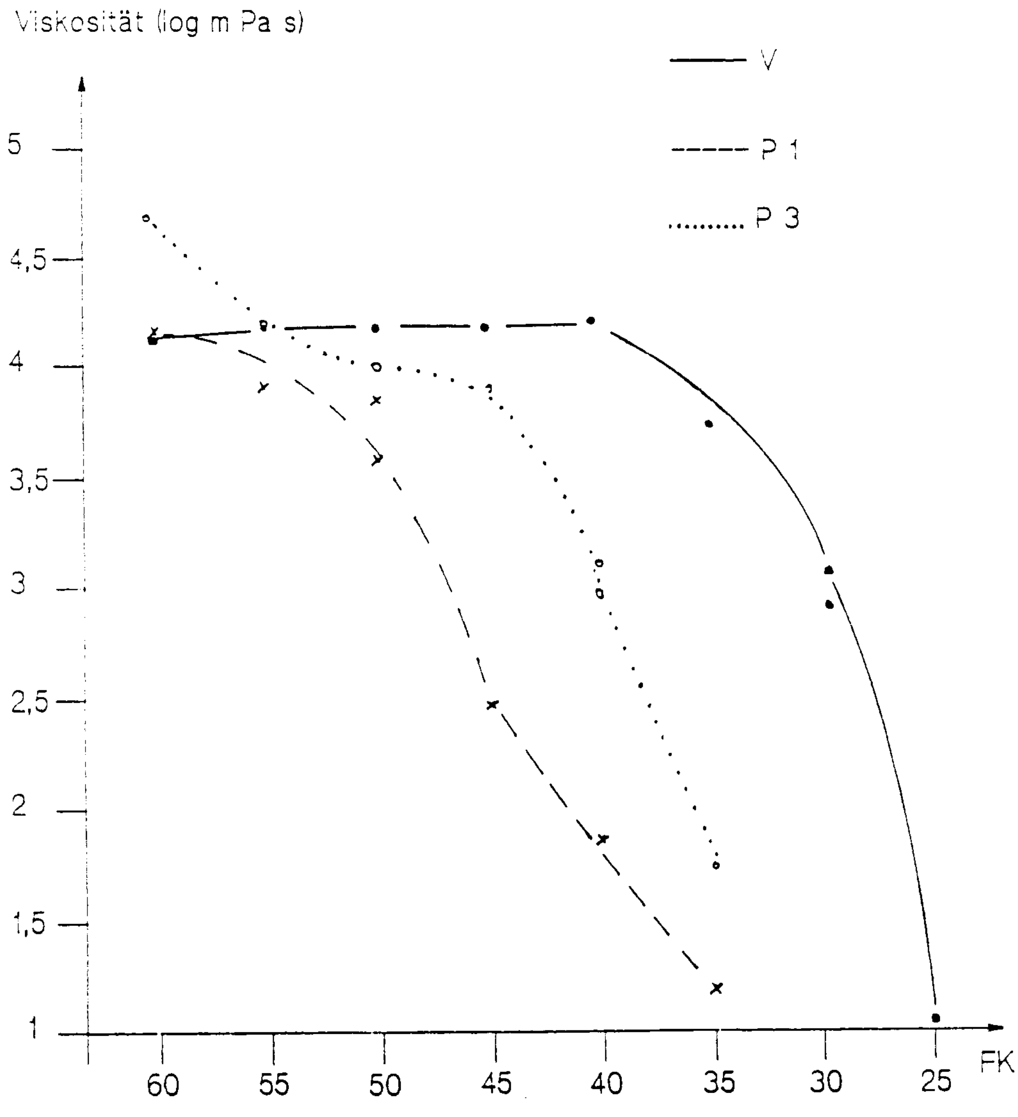


FK = Feststoffgehalt in Gew.-%